# EUROPÄISCHE PATENTANMELDUNG

(11) **EP 0 673 143 A2**
(43) Veröffentlichungstag der Anmeldung: **20.09.1995**
(21) Anmeldenummer: 95103808.2
(22) Anmeldetag: 16.03.1995
(51) Int. Cl.: H04M 1/66, H04M 15/28

(54) **Verfahren und Vorrichtung zum Anschliessen eines Telefons mit einem Telefonleitungsüberwachungsgerät an eine Telefonanschlussdose**

(30) Priorität: 18.03.1994 DE 4409452
(71) Anmelder: SWISSPHONE SYSTEMS GmbH, D-30519 Hannover (DE)
(72) Erfinder: Ertürk, Engin, Dr., D-30659 Hannover (DE)
(74) Vertreter: Lins, Edgar, Dipl.-Phys. Dr.jur.

(57) **Zusammenfassung**

Zum Anschließen eines Telefons mit einem Telefonüberwachungsgerät an eine Telefonanschlußdose mittels eines Adapters (1), der eine jegliche Manipulation zwischen der Telefonanschlußdose und dem Telefonüberwachungsgerät verhindern soll, sieht vor:
- Mit dem Adapter (1) wird ein Kontakt mit der Telefonanschlußdose hergestellt;
- nach einem Bereitmachen des Adapters (1) wird das Anliegen des Adapters (1) an der Telefonanschlußdose überprüft;
- es wird eine Verbindung einer in dem Adapter (1) mit der kontaktierten Telefonanschlußdose elektrisch verbundenen Kupplung (9) mit einem mit dem Telefon bzw. Telefonleitungsüberwachungsgerät verbundenen Kupplungsgegenstück (19) hergestellt;
- die hergestellte Verbindung von Kupplung (9) und Kupp-lungsgegenstück (19) wird überwacht, und es wird ein ordnungsgemäßes Signal erzeugt, wenn die Verbindung einmalig hergestellt und nicht gelöst worden ist;
- ein irreversibler Fehlerzustand des Adapters (1) wird erzeugt, wenn zwischen Adapter (1) und einer Gegenfläche nach dem Bereitmachen des Adapters ein Abstand entsteht, der größer ist als beim Anliegen;
- die Überwachung einer Telefonverbindung durch das Telefonleitungsüberwachungsgerät wird über den Adapter (1) nur vorgenommen, wenn kein irreversibler Fehlerzustand erzeugt worden ist;
- das die hergestellte Verbindung zwischen Kupplung (9) und Kupplungsgegenstück (19) kennzeichnende Signal wird als Schaltsignal oder als Prüfsignal für das Telefonleitungsüberwachungsgerät verwendet;
- durch einen Abstand zwischen Adapter (1) und einer Gegenfläche nach dem Bereitmachen des Adapters (1), der größer ist als beim Anliegen, wird ein irreversibler Fehlerzustand des Adapters (1) erzeugt.

## Beschreibung

Die Erfindung betrifft ein Verfahren zum Anschließen eines Telefons mit einem Telefonleitungsüberwachungsgerät an eine Telefonanschlußdose mittels eines Adapters. Die Erfindung betrifft ferner eine Anschlußvorrichtung zum manipulationssicheren Anschluß eines Telefons mit einem Telefonleitungsüberwachungsgerät an eine Telefonanschlußdose.

Es ist bekannt, Telefone mit Telefonleitungsüberwachungsgeräten zu verbinden, insbesondere um eine Überprüfung der an dem Telefonanschluß angefallenen Gebühren vornehmen zu können. Es ist bereits vorgeschlagen worden, die kompletten Signale auf der zu dem Telefonanschluß gehörenden Telefonleitung in geeigneter Form in Meßsignale umzusetzen und abzuspeichern, um so eine beweiskräftige Aufzeichnung des Telefonverkehrs in dem Telefonleitungsüberwachungsgerät zu ermöglichen.

Um jegliche Manipulationen auszuschließen und die Beweiskraft einer in einem Telefonleitungsüberwachungsgerät vorgenommenen Aufzeichnung sicherzustellen, muß dafür gesorgt werden, daß insbesondere zwischen der Telefonanschlußdose und dem Telefonleitungsüberwachungsgerät keine für das Gerät nicht erkennbaren Anzapfungen vorgenommen werden können. Erst wenn diese Möglichkeit ausgeschlossen ist, kann die Beweiskraft für die vorgenommene Aufzeichnung des Telefonverkehrs unterstellt werden.

Eine vorgeschlagene Versiegelung der Anschlußdose mit einem eingesteckten Telefonanschlußstecker wird hierfür nicht als ausreichend angesehen, da Manipulationen nicht vollständig ausgeschlossen werden können.

Die vorliegende Erfindung geht somit von der Problemstellung aus, ein Telefon mit einem Telefonleitungsüberwachungsgerät so an eine Telefonanschlußdose anzuschließen, daß nicht erkennbare Manipulationen zur Nutzung des Telefonanschlusses außerhalb der Erfassung des Telefonverkehrs durch das Telefonleitungsüberwachungsgerät ausgeschlossen werden können.

Ausgehend von dieser Problemstellung ist ein Verfahren der eingangs erwähnten Art erfindungsgemäß durch folgende Verfahrensschritte gekennzeichnet:
- Mit dem Adapter (1) wird ein Kontakt mit der Telefonanschlußdose hergestellt;
- nach einem Bereitmachen des Adapters (1) wird das Anliegen des Adapters (1) an der Telefonanschlußdose überprüft;
- es wird eine Verbindung einer in dem Adapter (1) mit der kontaktierten Telefonanschlußdose elektrisch verbundenen Kupplung (9) mit einem mit dem Telefon bzw. Telefonleitungsüberwachungsgerät verbundenen Kupplungsgegenstück (19) hergestellt;
- die hergestellte Verbindung von Kupplung (9) und Kupp-lungsgegenstück (19) wird überwacht, und es wird ein ordnungsgemäßes Signal erzeugt, wenn die Verbindung einmalig hergestellt und nicht gelöst worden ist;
- ein irreversibler Fehlerzustand des Adapters (1) wird erzeugt, wenn zwischen Adapter (1) und einer Gegenfläche nach dem Bereitmachen des Adapters ein Abstand entsteht, der größer ist als beim Anliegen;
- die Überwachung einer Telefonverbindung durch das Telefonleitungsüberwachungsgerät wird über den Adapter (1) nur vorgenommen, wenn kein irreversibler Fehlerzustand erzeugt worden ist;
- das die hergestellte Verbindung zwischen Kupplung (9) und Kupplungsgegenstück (19) kennzeichnende Signal wird als Schaltsignal oder als Prüfsignal für das Telefonleitungsüberwachungsgerät verwendet;
- durch einen Abstand zwischen Adapter (1) und einer Gegenfläche nach dem Bereitmachen des Adapters (1), der größer ist als beim Anliegen, wird ein irreversibler Fehlerzustand des Adapters (1) erzeugt.

Durch das erfindungsgemäße Verfahren werden in geschickter Weise die denkbaren Manipulationsmöglichkeiten ausgeschaltet. Durch eine vorzugsweise formschlüssige Verbindung zwischen Adapter und Telefonanschlußdose und durch eine bevorzugte Ausbildung einer Klebeverbindung wird erreicht, daß eine parallele Anzapfung der Telefonanschlußdose mit Hilfe von dünnen Drähtchen unmöglich gemacht wird, da die Drähtchen durch die formschlüssige Ausbildung abgeschert werden und darüber hinaus durch die Drähtchen erkennbare Beschädigungen des Gehäuses und insbesondere der Klebverbindung entstehen, die einen Manipulationsversuch erkennen lassen, wodurch die Aufzeichnung des Telefonleitungsüberwachungsgeräts als unbrauchbar angesehen werden kann. Durch die nicht zerstörungsfrei wieder lösbare Klebverbindung zwischen dem Adapter und der Telefonanschlußdose wird ausgeschlossen, daß der Adapter von der Telefonanschlußdose entfernt werden kann, ohne daß dies bemerkt wird. Die durch das Lösen der Klebverbindung bewirkte Zerstörung kann insbesondere in der Zerstörung einer bedruckten Klebefolie bestehen, an der das Lösen der Verbindung zwischen Adapter und Telefonanschlußdose erkennbar wird, was ebenfalls zur Folge haben kann, daß der Beweiswert des aufgezeichneten Telefonverkehrs in Frage zu stellen ist.

Die Überprüfung des Abstandes zwischen Adapter und einer Gegenfläche, die die Oberfläche der Telefonanschlußdose sein sollte, hat zur Folge, daß sichergestellt wird, daß zwischen dem Adapter und der Gegenfläche die Klebverbindung hergestellt wird. Eine Sicherung wird dadurch erreicht, daß nach dem Bereitmachen des Adapters jeder entstehende größere Abstand zwischen Adapter und einer Gegenfläche zur Ausbildung eines irreversiblen Fehlerzustandes führt, der als Fehlersignal vom Telefonleitungsüberwachungsgerät aufgezeichnet werden kann oder gar einen Zustand des Adapters herbeiführt, der dessen weitere Verwendung - und damit einen weiteren Telefonverkehr über diesen Telefonanschluß - unmöglich macht. Schließlich wird die ordnungsgemäße Verbindung zwischen Kupplung und Kupplungsgegenstück als Schaltsignal oder als Prüfsignal für das Telefonleitungsüberwachungsgerät verwendet. Die Verbindung zwischen Kupplung und Kupplungsgegenstück kann in dem Adapter oder in dem Telefon bzw. Telefonleitungsüberwachungsgerät vorgenommen sein.

Eine beweiskräftige Aufzeichnung des Telefonverkehrs auf dem betreffenden Telefonanschluß liegt daher nur vor, wenn sich der Adapter in einem ordnungsgemäßen Zustand befindet und die Aufzeichnung keine Prüfsignale enthält, die einen fehlerhaften Zustand kennzeichnen. Der ordnungsgemäße Zustand des Adapters läßt sich durch die unbeschädigte Klebefläche und das Vorhandensein eines den richtigen Abstand des Adapters von der Gegenfläche kennzeichnenden Signals feststellen. Die Überprüfung der Klebefläche und etwaiger Manipulationen im Innern des Adapters läßt sich mit Vorteil in einfacher Form durchführen, wenn das Gehäuse des Adapters durchsichtig ausgebildet ist.

Es ist besonders vorteilhaft, das Prüfsignal für das vorzugsweise flächige Anliegen des Adapters an der Telefonanschlußdose über Zusatzkontakte von Kupplung und Kupplungsgegenstück zu übertragen. Auf diese Weise gelingt es in einfacher Form ohne Zusatzleitungen, Prüfsignale zu übertragen.

Die Prüfsignale können als Schaltsignale für das Unterbinden der Telefonbenutzung verwendet werden, wobei eine entsprechende Unterbindung durch das Telefonleitungsüberwachungsgerät oder eine entsprechende Schaltung innerhalb des Adapters erfolgen kann.

Ausgehend von der oben erwähnten Problemstellung ist eine Anschlußvorrichtung der eingangs erwähnten Art erfindungsgemäß gekennzeichnet durch
- ein transparentes Gehäuse mit einer Stirnwand, deren Oberfläche einen Telefonanschlußstecker zur Herstellung einer Verbindung der Stirnwand mit der Telefonanschlußdose sowie eine Durchtrittsöffnung aufweist,
- einen in Richtung der Durchtrittsöffnung federbelasteten Bolzen, der nicht zerstörungsfrei gegen die Federkraft bewegbar ist,
- eine die Durchtrittsöffnung verschließende, zur Freigabe der Durchtrittsöffnung betätigbare Sicherung,
- eine Kontaktanordnung zur Abgabe eines Signals in Abhängigkeit vom Durchtritt des Bolzens durch die Durchtrittsöffnung,
- eine mit dem Stecker (4) und der Kontaktanordnung (17) verbundene Kupplung, die mit einem mit dem Telefon bzw. Telefonleitungsüberwachungsgerät verbundenen Kupplungsgegenstück (19) verbindbar ist,
- einen Schalter des Kupplungsgegenstücks zur Abgabe eines den Verbindungszustand des Kupplungsgegenstücks mit der Kupplung kennzeichnenden Signals und
- einen transparenten Abschluß der bewegbaren Teile voneinander.

Mit der erfindungsgemäßen Anschlußvorrichtung werden die Vorteile erzielt, die anhand des erfindungsgemäßen Verfahrens beschrieben sind.

Vorzugsweise ist die Oberfläche der Stirnwand komplementär zur Oberfläche der Telefonanschlußdose ausgeformt und/oder sie weist eine Klebschicht zur Herstellung einer nicht zerstörungsfrei lösbaren Verbindung der Stirnwand mit der Oberfläche der Telefonanschlußdose auf.

Etwaige Manipulationsmöglichkeiten im Inneren des Adapters werden durch den transparenten Abschluß der bewegbaren Teile voneinander ausgeschlossen. Besonders vorteilhaft ist es, wenn das Gehäuse mit Ausnahme der für die Bewegung der bewegbaren Teile benötigten Räume vollständig transparent gefüllt, insbesondere vergossen ist.

Als Klebschicht eignet sich insbesondere eine bedruckte Klebefolie mit einer Vielzahl von Sollbruchstellen, die bei der Lösung der Klebverbindung zu einer sofort erkennbaren Zerstörung der Folie führen. Die Erkennbarkeit ergibt sich auch noch beim montierten Adapter aufgrund der transparenten Ausbildung des Gehäuses.

Für den Fall, daß eine Gebührenabrechnung durch den Fernmeldenetzbetreiber in Zweifel gezogen wird, muß das Kupplungsgegenstück von der Kupplung getrennt werden. Ein entsprechendes Signal wird von dem Telefonleitungsüberwachungsgerät aufgezeichnet und kennzeichnet das Ende der beweiskräftigen Aufzeichnung des Telefonverkehrs. Das Kupplungsgegenstück wird dann mit dem Telefonleitungsüberwachungsgerät zur Überprüfung gegeben. Um während der Überprüfung von demselben Telefonanschluß weiter telefonieren zu können, kann ein mit dem Telefon verbindbares Kupplungsgegenstück dem Telefonbenutzer mitgeliefert werden, das einen normalen Telefonverkehr durch Einführung des Kupplungsgegenstücks in den Adapter ermöglicht, so daß das Adaptergehäuse auch während der Überprüfung an Ort und Stelle verbleiben kann. Daher muß kein neues Adaptergehäuse installiert werden, wenn eine Überprüfung der Aufzeichnungen des Telefonleitungsüberwachungsgeräts vorgenommen wird.

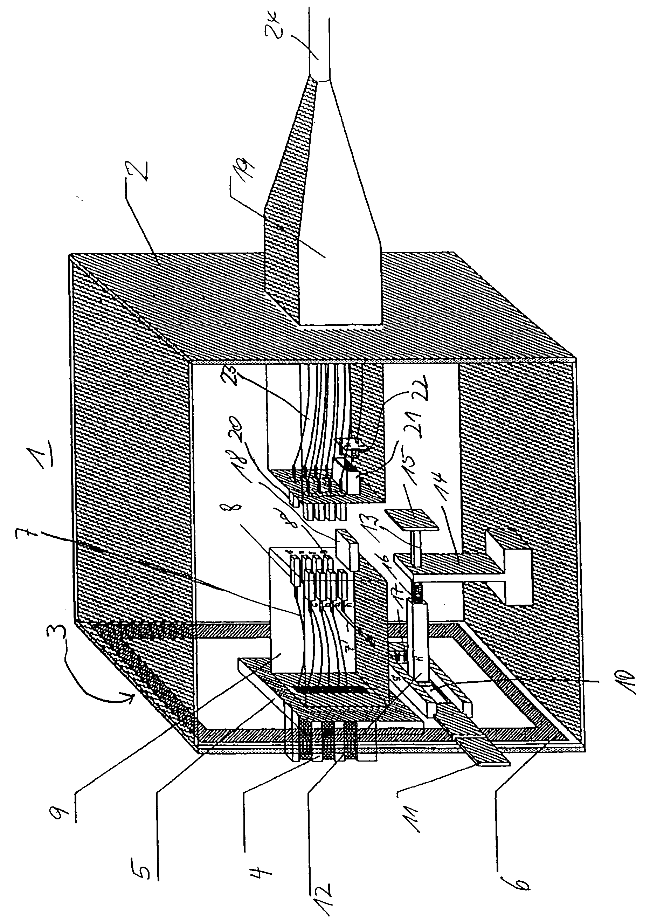

Die Erfindung soll im folgenden anhand eines in der Zeichnung dargestellen Ausführungsbeispiels näher erläutert werden.

Die Zeichnung läßt einen Adapter 1 erkennen, der ein Gehäuse 2 mit durchsichtigen Wänden aufweist. Eine Stirnseite 3 des Gehäuses 2 weist einen angesetzten Telefonstecker 4 für eine (nicht dargestellte) Telefonanschlußdose auf. Der in dem Ausführungsbeispiel dargestellte Telefonstecker 4 ist ein TAE-Stecker für eine TAE-Telefondose.

Aus der ebenen Stirnwand 3 ragt ein rechteckiger Vorsprung 5 heraus, der komplementär zu einer entsprechenden eingezogenen Oberfläche der Telefonanschlußdose ausgebildet ist, so daß die resultierende Stirnseite 3 eine der Oberfläche der Telefonanschlußdose
komplementäre Form aufweist. Etwaige dünne Drähtchen zur Ausbildung einer parallelen Anzapfung der Telefonanschlußdose werden an den Knickstellen der komplementären Ausbildung der Stirnwand 3 und der Oberfläche der Telefonbuchse abgeschert oder eingedrückt, so daß entweder Manipulationen nicht möglich oder zumindest erkennbar sind.

Auf die Stirnseite 3 ist in Form eines streifenförmigen Rahmens eine fälschungssichere Klebefolie 6 aufgebracht, die eine klebende Verbindung zwischen der Telefonanschlußdose und der Stirnseite 3 des Gehäuses 2 herstellt, wenn der Stecker 4 in die zugehörige Telefonanschlußdose fest eingesteckt ist. Durch die fälschungssichere Klebefolie 6 wird erreicht, daß ein Entfernen des Adapters 1 aus der Telefonanschlußdose sofort zu einer entsprechenden Zerstörung der Klebefolie 6 führt, die vorzugsweise mit einem Muster, Prüfziffern, Seriennummern usw. bedruckt sein kann und so eine Zerstörung sofort erkennen läßt. Die Erkennbarkeit ist auch beim montierten Adapter 1 gegeben, weil der Adapter transparent ausgeführt ist.

Die Kontakte des Telefonsteckers 4 sind über Verbindungsdrähtchen 7 mit Buchsenkontakten 8 einer Kupplung 9 verbunden.

Unterhalb der Kupplung 9 befindet sich in der Stirnwand 3 eine Durchgangsöffnung 10, die durch einen Schieber 11 im Ausgangszustand des Adapters 1 verschlossen ist. Gegen den Schieber 11 drückt ein Bolzen 12. Am Ende der Bolzenstange 13 befindet sich eine Anschlagplatte 15. Zwischen dem Ende des Bolzens 12 und der Halterung 14 ist eine Druckfeder 16 um die Bolzenstange 13 gelegt, so daß der Bolzen 12 federbelastet gegen den Schieber 11 drückt.

Ist der Adapter 1 durch Einstecken des Steckers 4 (nach Abziehen einer Schutzfolie für die fälschungssichere Klebefolie 6) an der Telefonanschlußdose montiert, so daß eine klebende Verbindung zwischen der Stirnseite 3 und der Oberfläche der Anschlußdose durch die Klebefolie 6 hergestellt wird, muß der Benutzer durch Verschieben des Schiebers 11 den Adapter bereitmachen, wodurch der Bolzen 12 aufgrund seiner Federbelastung durch die Durchtrittsöffnung 10 in der Stirnwand 3 hindurchtritt und gegen die Oberfläche der Telefonanschlußdose drückt. Mit der Bolzen-Schieber-Vorrichtung 12, 11 sind Kontakte 17 verbunden, die über Drähtchen 7' mit Zusatzkontaktbuchsen 8' der Kupplung 9 verbunden sind.

Die Halterung des Bolzens 12 ist so ausgebildet, daß der Bolzen nur in Richtung Außenraum des Adapters 1 bewegbar ist, nicht aber vom Außenraum in den Adapter 1 zurückdrückbar ist. Das hat zur Folge, daß ein Lösen des Adapters 1 von der Telefonanschlußdose den Bolzen 12 durch die Kraft der Druckfeder 16 durch die Durchtrittsöffnung 10 weiter nach außen drückt, bis der Bolzen auf einen Widerstand stößt oder die Anschlagplatte 15 im Zusammenspiel mit der Halterung 14 die Bewegung des Bolzens 12 begrenzt. Da ein Zurückdrücken nicht möglich ist, ist der Adapter 1 zur Herstellung einer Telefonverbindung nicht mehr brauchbar, da der nach außen gedrückte Bolzen 12 eine Kontaktierung des Steckers 4 mit der Telefonanschlußdose verhindert.

Die Kupplung 9 weist einen aus der Stirnfläche der Buchsenkontakte 8, 8' herausragenden Ansatz 18.

Mit einem (nicht dargestellten) Telefonleitungsüberwachungsgerät ist ein Kabel mit einem Kupplungsgegenstück 19 fest verbunden. Das Kupplungsgegenstück 19 weist zu den Buchsenkontakten 8, 8' gehörende Gegenkontakte 20 auf, die in die Buchsenkontakte 8, 8' einführbar sind. Bei der Herstellung der festen Verbindung zwischen Kupplung 9 und Kupplungsgegenstück 19 ragt der Ansatz 8 in eine entsprechende Durchgangsführung 21 des Kupplungsgegenstückes und betätigt bei korrekter Verbindung von Kupplung 9 und Kupplungsgegenstück 19 die Kontakte eines Schalters 22, der so ein Signal für die ordnungsgemäße Kontaktierung von Kupplung 9 und Kupplungsgegenstück 19 erzeugt.

Die Kontakte 20 sind über Drähtchen 23 mit einem Verbindungskabel 24 zum Anschluß an das Telefonleitungsüberwachungsgerät verbunden.

Der Schalter 22 ist so ausgebildet, daß er bei einer Kontaktierung oder Trennung von Kupplung 9 und Kupplungsgegenstück 19 durch den Ansatz 18 betätigbar ist. Das angeschlossene Telefonleitungsüberwachungsgerät kann so ausgebildet sein, daß ein einmaliges Lösen des Kupplungsgegenstücks 19 von der Kupplung 9 eine weitere beweiskräftige Aufzeichnung des Telefonverkehrs durch das Telefonleitungsüberwachungsgerät verhindert.

Die Steckverbindung aus Kupplung 9 und Kupplungsgegenstück 19 kann - wie dargestellt - in dem Adapter 1 realisiert sein. In gleicher Weise ist es möglich, diese Steckverbindung in dem Gehäuse des Telefonleitungsüberwachungsgeräts vorzusehen.

In dem dargestellten Ausführungsbeispiel sind die Kontakte 17 durch den Schieber 11 betätigbar, geben also ein Entriegelungssignal für den Bolzen 12. Selbstverständlich können diese Kontakte 17 auch mit dem Bolzen 12 verbunden sein und ein Entriegelungssignal abgeben, wenn der Bolzen 12 durch die Durchtrittsöffnung 10 hindurchtritt. Das Entriegelungssignal steht an den Buchsenkontakten 8' an.

An zwei der Buchsenkontakte 8 (a, b) liegen die Amtsleitungssignale an. Die Spannung zwischen den Buchsenkontakten a und b von 8 kann daher ebenfalls als Prüfsignal verwendet werden. Ein drittes Signal kann durch die Kontakte des Schalters 22 gebildet werden. Bereits diese drei Signale erlauben eine zuverlässige Prüfung des Adapters 1 mit der Feststellung, ob das angeschlossene Telefonleitungsüberwachungsgerät noch für die Inbetriebnahme aktivierbar ist, aufgrund eines Bedienungsfehlers bzw. Manipulationsversuches nicht mehr für eine beweiskräftige Aufzeichnung aktivierbar ist oder zuverlässig im Betrieb ist.

Der erfindungsgemäße Adapter 1 stellt daher ein wichtiges Hilfsmittel dar, mit Hilfe eines Telefonleitungsüberwachungsgeräts eine beweiskräftige Aussage über den auf einem Telefonanschluß erfolgten Telefonverkehr und dessen gebührenrechtliche Relevanz zu erstellen.

## Patentansprüche

1. Verfahren zum Anschließen eines Telefons mit einem Telefonleitungsüberwachungsgerät an eine Telefonanschlußdose mittels eines Adapters (1)**, gekennzeichnet durch** folgende Verfahrensschritte:
- Mit dem Adapter (1) wird ein Kontakt mit der Telefonanschlußdose hergestellt;
- nach einem Bereitmachen des Adapters (1) wird das Anliegen des Adapters (1) an der Telefonanschlußdose überprüft;
- es wird eine Verbindung einer in dem Adapter (1) mit der kontaktierten Telefonanschlußdose elektrisch verbundenen Kupplung (9) mit einem mit dem Telefon bzw. Telefonleitungsüberwachungsgerät verbundenen Kupplungsgegenstück (19) hergestellt;
- die hergestellte Verbindung von Kupplung (9) und Kupplungsgegenstück (19) wird überwacht, und es wird ein ordnungsgemäßes Signal erzeugt, wenn die Verbindung einmalig hergestellt und nicht gelöst worden ist;
- ein irreversibler Fehlerzustand des Adapters (1) wird erzeugt, wenn zwischen Adapter (1) und einer Gegenfläche nach dem Bereitmachen des Adapters ein Abstand entsteht, der größer ist als beim Anliegen;
- die Überwachung einer Telefonverbindung durch das Telefonleitungsüberwachungsgerät wird über den Adapter (1) nur vorgenommen, wenn kein irreversibler Fehlerzustand erzeugt worden ist;
- das die hergestellte Verbindung zwischen Kupplung (9) und Kupplungsgegenstück (19) kennzeichnende Signal wird als Schaltsignal oder als Prüfsignal für das Telefonleitungsüberwachungsgerät verwendet;
- durch einen Abstand zwischen Adapter (1) und einer Gegenfläche nach dem Bereitmachen des Adapters (1), der größer ist als beim Anliegen, wird ein irreversibler Fehlerzustand des Adapters (1) erzeugt.

2. Verfahren nach Anspruch 1, dadurch gekennzeichnet, daß zwischen Adapter (1) und Telefonanschlußdose ein formschlüssiger Kontakt hergestellt wird.

3. Verfahren nach Anspruch 1 oder 2, dadurch gekennzeichnet, daß der Kontakt zwischen Adapter (1) und Telefonanschlußdose unter Ausbildung einer solchen Klebeverbindung (6) hergestellt wird, die nicht zerstörungsfrei lösbar ist.

4. Verfahren nach einem der Ansprüche 1 bis 3, dadurch gekennzeichnet, daß das Prüfsignal für das Anliegen des Adapters (1) an der Telefonanschlußdose über Zusatzkontakte (8') von Kupplung (9) und Kupplungsgegenstück (19) übertragen wird.

5. Verfahren nach einem der Ansprüche 1 bis 4, dadurch gekennzeichnet, daß die Prüfsignale als Schaltsignale für das Unterbinden der Überwachung der Telefonbenutzung verwendet werden.

6. Verfahren nach einem der Ansprüche 1 bis 5, gekennzeichnet durch die Verwendung eines durchsichtigen Gehäuses (2) des Adapters (1).

7. Anschlußvorrichtung zum manipulationssicheren Anschluß eines Telefons mit einem Telefonleitungsüberwachungsgerät an einer Telefonanschlußdose, **gekennzeichnet durch**
- ein transparentes Gehäuse (2) mit einer Stirnwand (3), deren Oberfläche einen Telefonanschlußstecker (4) zur Herstellung einer Verbindung mit der Telefonanschlußdose sowie eine Durchtrittsöffnung (10) aufweist,
- einen in Richtung der Durchtrittsöffnung (10) federbelasteten Bolzen (12), der nicht zerstörungsfrei gegen die Federkraft bewegbar ist,
- eine die Durchtrittsöffnung (10) verschließende, zur Freigabe der Durchtrittsöffnung (10) betätigbare Sicherung (11),
- eine Kontaktanordnung (17) zur Abgabe eines Signals in Abhängigkeit vom Durchtritt des Bolzens (12) durch die Durchtrittsöffnung (10),
- eine mit dem Stecker (4) und der Kontaktanordnung (17) verbundene Kupplung, die mit einem mit dem Telefon bzw. Telefonleitungsüberwachungsgerät verbundenen Kupplungsgegenstück (19) verbindbar ist,
- einen Schalter (22) des Kupplungsgegenstücks (19) zur Abgabe eines den Verbindungszustand des Kupplungsgegenstücks (19) mit der Kupplung (9) kennzeichnenden Signals und
- einen transparenten Abschluß der bewegbaren Teile voneinander.

8. Anschlußvorrichtung nach Anspruch 7, dadurch gekennzeichnet, daß das Gehäuse (2) mit Ausnahme der für die Bewegung der bewegbaren Teile benötigten Räume volllständig transparent gefüllt ist.

9. Anschlußvorrichtung nach Anspruch 7 oder 8, dadurch gekennzeichnet, daß die Klebschicht aus einer bedruckten Klebefolie (6) mit einer Vielzahl von Sollbruchstellen gebildet ist.

10. Anschlußvorrichtung nach einem der Ansprüche 7 bis 9, dadurch gekennzeichnet, daß die Oberfläche der Stirnwand (3) komplementär zur Oberfläche der Telefonanschlußdose ausgeformt ist.

11. Anschlußvorrichtung nach einem der Ansprüche 7 bis 10, dadurch gekennzeichnet, daß die Oberfläche der Stirnwand (3) eine Klebschicht (6) zur Herstellung einer nicht zerstörungsfrei lösbaren Verbindung der Stirnwand (3) mit der Oberfläche der Telefonanschlußdose aufweist.
